Europäisches Patentamt

European Patent Office

Office européen des brevets

(11) Numéro de publication: **0 299 284**
**A2**

## (12) DEMANDE DE BREVET EUROPEEN

(21) Numéro de dépôt: 88110439.2

(22) Date de dépôt: 30.06.88

(51) Int. Cl.⁴: **H01M 4/42 , C22C 1/04**

(30) Priorité: **13.07.87 LU 86939**

(43) Date de publication de la demande:
**18.01.89 Bulletin 89/03**

(84) Etats contractants désignés:
**BE CH DE ES FR GB LI SE**

(71) Demandeur: **METALLURGIE
HOBOKEN-OVERPELT Société anonyme dite:
A. Greinerstraat, 14
B-2710 Hoboken(BE)**

(72) Inventeur: **Strauven, Ivan A.J.
Hayenhoek 29
B-3580 Neerpelt(BE)**
Inventeur: **Meeus, Marcel L.
Harkstraat 29
B-3900 Lommel(BE)**

(74) Mandataire: **Saelemaekers, Juul et al
METALLURGIE HOBOKEN-OVERPELT A.
Greinerstraat 14
B-2710 Hoboken(BE)**

(54) **Poudre de zinc pour batteries alcalines.**

(57) Une poudre à base de zinc pour batteries alcalines est constituée de 0,05 à 3% de mercure, de 0,003 à 0,2% de bismuth, de 0,01 à 0.08% de plomb, le reste étant du zinc. Cette poudre présente une excellente résistance à la corrosion en milieu alcalin.

EP 0 299 284 A2

## Poudre de zinc pour batteries alcalines

La présente invention se rapporte à une poudre à base de zinc contenant du mercure, du bismuth et du plomb pour batteries alcalines.

La présence de mercure, de bismuth et de plomb dans une telle poudre augmente la résistance de cette poudre à la corrosion dans l'électrolyte de la batterie.

Une poudre à base de zinc telle que définie ci-dessus est décrite dans le document JP-A-59 94371. Cette poudre connue est constituée de 0,05% de plomb, 0,01% de bismuth, 0,01% de cadmium, 0,01% d'étain, 0,01% de thallium, 0,02% d'indium, 0,9% de mercure, le reste étant du zinc. Cette poudre présente l'inconvénient de contenir du cadmium et du thallium qui sont des éléments très toxiques.

Le but de la présente invention est de fournir une poudre telle que définie ci-dessus, qui évite l'inconvénient de la poudre connue et qui présente une excellente résistance à la corrosion en milieu alcalin.

La poudre selon l'invention est caracterisée en ce qu'elle est constituée essentiellement de 0,05 à 3% en poids de mercure, de 0,003 à 0,2% en poids de bismuth, de 0,01 à 0,08% en poids de plomb, le reste étant du zinc.

En effet, il a été trouvé, comme il sera démontré plus loin, qu'une telle poudre, bien que contenant beaucoup moins d'éléments inhibiteurs de la corrosion que la poudre connue, présente néanmoins une excellente résistance à la corrosion en milieu alcalin, sa résistance à la corrosion étant par exemple aussi bonne que celle de la poudre connue lorsqu'elle contient autant de mercure, de plomb et de bismuth que la poudre connue, ce qui est vraiment surprenant.

La poudre de l'invention contient donc au moins 0,05% de mercure, 0,003% de bismuth et 0,01% de plomb. Ces teneurs sont nécessaires pour que sa résistance à la corrosion soit suffisante. Les teneurs maximales en mercure, bismuth et plomb s'élèvent respectivement à 3%, 0,2% et 0,08%, parce que des teneurs plus élevées n'apportent plus une améliori ation sensible à la résistance à la corrosion.

L'expression "constituée essentiellement" utilisée ci-dessus signifie que les seuls composants de la poudre sont du mercure, du bismuth et du plomb, tous d'une pureté d'au moins 99,9%, et du zinc de la qualité SHG ("Special High Grade"), ainsi que les impuretés inévitablement présentes dans ces métaux.

La poudre contient avantageusement de 0,1 à 3% de mercure, de 0,03 à 0,06% de plomb et de 0,003 à 0,049% de bismuth, la teneur la plus préférentielle en mercure allant de 1,3 à 1,7% et celle en bismuth de 0,025 à 0,045%.

La poudre de l'invention peut être préparée par l'une des méthodes suivantes :
- atomisation d'un bain fondu de zinc contenant l'ensemble des composants mineurs (Hg, Bi. Pb);
- atomisation d'un bain fondu de zinc contenant déjà une partie des composants mineurs (par exemple : l'ensemble du plomb et une partie du mercure) et introduction du reste des composants mineurs (par exemple : l'ensemble du bismuth et le reste du mercure ) dans la poudre atomisée soit par amalgamation (par exemple : avec un amalgame Hg-Bi) soit par cémentation suivie d'amalgamation (par exemple : cémentation du bismuth sur la poudre atomisée et amalgamation avec du mercure de la poudre ainsi obtenue);
- atomisation d'un bain fondu de zinc pur et introduction de l'ensemble des composants mineurs dans la poudre atomisée soit par amalgamation soit par cémentation suivie d'amalgamation.

### Exemple 1

Cet exemple se rapporte à une poudre à base de zinc contenant du mercure, du bismuth et du plomb pour batteries alcalines selon la présente invention.

On prépare un bain fondu de zinc contenant 0,05% de plomb et 0,045% de bismuth. On homogénéise ce bain fondu à 450°C par agitation. On fait s'écouler l'alliage fondu dans un jet d'air comprimé en produisant ainsi une poudre d'alliage dont les particules ont sensiblement la même composition homogène (Zn - 0,05 Pb - 0,045 Bi) que celle du bain fondu homogène.

On tamise la poudre d'alliage de manière à en séparer la fraction supérieure à 500 $\mu$m et, dans la mesure du possible, la fraction inférieure à 75 $\mu$m. On obtient ainsi une poudre d'alliage d'une granulométrie de 75 à 500 $\mu$m.

On mélange la poudre d'alliage tamisée à la température ambiante avec 1,5% de mercure (par rapport au zinc). On obtient ainsi une poudre contenant par rapport au zinc 0,05% de plomb, 0,045% de bismuth et 1,5% de mercure.

On examine la résistance de cette poudre à la corrosion en milieu alcalin. On utilise à cet effet un électrolyte constitué de 35% en poids de KOH, 2% en poids de ZnO et 63% en poids d'eau distillé. On introduit 70 g de la poudre dans 160 ml de cet électrolyte, que l'on maintient à 71°C et on détermine la quantité d'hydrogène qui se dégage de l'électrolyte en 14 jours. On trouve que la vitesse de dégagement gazeux ("gassing rate") est de 30,1 μl par gramme de poudre et par jour.

### Exemple 2

Cet exemple se rapporte également à une poudre selon la présente invention.

On opère de la même façon que dans l'exemple 1, mais, au lieu de préparer un bain fondu contenant 0,05% de plomb et 0,045% de bismuth, on prépare un bain fondu ne contenant que 0,05% de plomb, et au lieu d'amalgamer la poudre d'alliage tamisée avec 1,5% de mercure on l'amalgame avec 1,55% d'un amalgame contenant 2,9% en poids de bismuth et 97,1% en poids de mercure. On obtient ainsi une poudre de la même composition et de la même granulométrie que la poudre d'exemple 1.

On trouve une vitesse de dégagement gazeux de 32,3 μl/g/jour.

### Exemple 3

Cet exemple se rapporte à une poudre à base de zinc contenant du mercure, du bismuth et du plomb pour batteries alcalines selon l'art antérieur précité.

On opère de la même façon que dans l'exemple 1, mais au lieu de préparer un bain fondu contenant 0,05% de plomb et 0,045% de bismuth, on prépare un bain fondu contenant 0,05% de plomb, 0,01% de bismuth, 0,01% de cadmium, 0,01% d'étain, 0,01% de thallium et 0,02% d'indium, et, au lieu d'amalgamer la poudre d'alliage tamisée avec 1,5% de mercure on l'amalgame avec 0,9% de mercure. On obtient finalement une poudre contenant par rapport au zinc 0,05% de plomb, 0,01% de bismuth, 0,01% de cadmium, 0,01% d'étain, 0,01% de thallium, 0,01% d'indium et 0,9% de mercure.

On trouve une vitesse de dégagement gazeux de 48,0 μl/g/jour.

### Exemple 4

Cet exemple se rapporte de nouveau à une poudre selon la présente invention.

On opère de la même façon que dans l'exemple 3, mais au lieu de préparer un bain fondu contenant 0,05% de plomb, 0,01% de bismuth, 0,.01% de cadmium, 0,01% d'étain, 0,01% de thallium et 0,02% d'indium, on prépare un bain fondu ne contenant que 0,05% de plomb et 0,01% de bismuth. On obtient ainsi une poudre contenant par rapport au zinc 0,05% de plomb, 0,01% de bismith et 0,9% de mercure.

On trouve une vitesse de dégagement gazeux de 48,6 μl/g/jour. Celle-ci est tout à fait comparable à celle trouvée dans l'exemple 3.

### Exemple 5

Cet exemple se rapporte également à une poudre selon la présente invention.

On opère de la même façon que dans l'exemple 3, mais au lieu de préparer un bain fondu contenant 0,05% de plomb de 0,01% de bismuth, on prépare un bain fondu contenant 0,05% de plomb et 0,045% de bismuth. On obtient ainsi une poudre contenant par rapport au zinc 0,05% de plomb, 0,045% de bismuth et 0,9% de mercure.

On trouve une vitesse de dégagement gazeux de 41,0 μl/g/jour.

## Revendications

1. Poudre à base de zinc contenant du mercure, du bismuth et du plomb pour batteries alcalines, caractérisée en ce qu'elle est constituée essentiellement de 0,05 à 3% de mercure, de 0,003 à 0,2% de bismuth, de 0,01% à 0,08% de plomb, le reste étant du zinc.

2. Poudre selon la revendication 1, caractérisée en ce qu'elle contient de 0,1 à 3% de mercure.

3. Poudre selon la revendication 2, caractérisée en ce qu'ele contient de 1,3 à 1,7% de mercure.

4. Poudre selon la revendication 1, 2 ou 3, caractérisée en ce qu'elle contient de 0,03 à 0,06% de plomb.

5. Poudre selon l'une des revendications 1-4, caractérisée en ce qu'elle contient de 0,003 à 0,049% de bismuth.

6. Poudre selon la revendication 5, caractérisée en ce qu'elle contient de 0,025 à 0,045% de bismuth.